# EUROPEAN PATENT SPECIFICATION

(11) **EP 3 786 871 B1**
(45) Date of publication and mention of the grant of the patent: **20.12.2023**
(21) Application number: 19791685.1
(22) Date of filing: 12.04.2019
(51) Int. Cl.: H04L 67/104, G06F 21/64, G06Q 20/02, G06Q 20/08, G06Q 20/14, G06Q 20/32, G06Q 20/40, G06Q 30/0201, G06Q 30/0601, G07F 17/00, H04L 9/32, H04L 9/00, H04L 9/40, H04L 67/306, H04L 67/12

(54) **VEHICLE-RELATED INFORMATION PROCESSING BASED ON BLOCKCHAIN**
VERARBEITUNG FAHRZEUGBEZOGENER INFORMATIONEN AUF BLOCKCHAIN-BASIS
TRAITEMENT D'INFORMATIONS LIÉES À UN VÉHICULE SUR LA BASE D'UNE CHAÎNE DE BLOCS

(30) Priority: 24.04.2018 CN 201810374715
(43) Date of publication of application: 03.03.2021
(73) Proprietor: SHENZHEN GOLO IOV REPAIR TECHNOLOGY CO., LTD., Shenzhen, Guangdong 518000 (CN)
(72) Inventor: LIU, Jun, Shenzhen, Guangdong 518000 (CN); LIU, Xin, Shenzhen, Guangdong 518000 (CN); GUO, Zhaohui, Shenzhen, Guangdong 518000 (CN); LAN, Fei, Shenzhen, Guangdong 518000 (CN)
(74) Representative: Gunzelmann, Rainer
(86) International application number: PCT/CN2019/082375
(87) International publication number: WO 2019/205955

(56) References cited:
- WO-A1-2018/020373
- CN-A- 106 559 211
- CN-A- 107 798 532
- CN-A- 107 944 285
- CN-A- 108 615 150
- US-A1- 2018 018 723
- CHUKA OHAM ET AL: "A Blockchain Based Liability Attribution Framework for Autonomous Vehicles", ARXIV.ORG, CORNELL UNIVERSITY LIBRARY, 201 OLIN LIBRARY CORNELL UNIVERSITY ITHACA, NY 14853, 14 February 2018 (2018-02-14), XP080856654,

## Description

### TECHNICAL FIELD

The present disclosure relates to the field of information processing, and in particular, to a method and an apparatus for processing vehicle-related information based on blockchain, a computer device and a computer readable storage medium.

### BACKGROUND

With the development of Internet technology, people's lives and work are increasingly inseparable from the Internet. The driving process of vehicle owners is also inseparable from the Internet. For example, vehicle owners will pay the fuel fees for vehicles, navigate vehicles, purchase vehicle insurances, purchase vehicle accessories and the like in the Internet. In the process of the Internet bringing convenience to people, the providers of Internet services are constantly collecting vehicle-related information of the owners, for example, the owner of the vehicle with the license plate 12345 adds C liters of diesel to the vehicle at location B on day A and consumes D yuan by means of WeChat scan payment. Under market economy condition, information has become an extremely important commodity, for example, it can be used to guide offline or online merchants to develop business strategies. Therefore, the transaction of vehicle-related information has become an increasingly important type of transaction in the automotive industry.

Blockchain technology is a distributed and non-centralized ledger system that integrates cryptography applications, network technologies and database technologies and can provide a new technology which provides multi-party participation and ensures transparent, fair and sharing. A smart contract deployed in a blockchain is a digital contract that can be automatically executed in a computer. In prior art it has been proposed to conduct vehicle-related information transactions based on blockchains to ensure that transaction information cannot be tampered, traceable and the like.

However, many vehicle-related information contains the privacy information of the vehicle owners. If the transactions and spread of vehicle-related information involving the vehicle owners' private information is allowed, the vehicle owners' personal and property safety will be threatened.

US2018/018723A1 discloses a vehicle record platform using blockchain technology. Vehicle records are recorded using blocks linked by vehicle identification number. The vehicle record stores historical information about vehicles, and the historical information includes collision information, financing information, transfer of ownership information, and other transaction information.

CN107798532 A discloses a vehicle-mounted terminal payment method, including following steps: detecting state information of a vehicle, and searching a smart contract related to the vehicle on a blockchain, the smart contract includes a triggering condition, service requirements and payment information; searching a target merchant which is previously registered and meets the service requirements on the blockchain if the state information meets the triggering condition; and paying fees to the target merchant according to the payment information after smart service provided by the target merchant is received by the vehicle. This document further discloses a vehicle-mounted payment terminal. In the disclosure of this document, the vehicle can be linked to the blockchain through the vehicle-mounted terminal, and the target merchant which meets the service requirements is searched on the blockchain, fees are paid for the target merchant using a blockchain technology after the service of the target merchant is received, a centralized payment mode is abandoned.

### SUMMARY

The present invention is defined by the independent claims. Preferred embodiments are defined by the dependent claims.

### BRIEF DESCRIPTION OF THE DRAWINGS

Fig. 1 is a schematic diagram of an example method for processing vehicle-related information based on blockchain according to an embodiment of the present disclosure;
Fig. 2 is a schematic diagram of another example method for processing vehicle-related information based on blockchain according to an embodiment of the present disclosure;
Fig. 3 is a schematic flowchart of a possible refinement of step 206 in the embodiment of the present disclosure;
Fig. 4 is a schematic diagram of an example apparatus for processing vehicle-related information based on blockchain according to an embodiment of the present disclosure;
FIG. 5 is a schematic diagram of another example apparatus for processing vehicle-related information based on blockchain according to an embodiment of the present disclosure; and
FIG. 6 is a schematic diagram of an example computer device according to an embodiment of the present disclosure.

### DETAILED DESCRIPTION OF THE EMBODIMENTS

Examples of the present disclosure provide a method and an apparatus for processing vehicle-related information based on blockchain, a computer device and a computer readable storage medium, which are used to prohibit or restrict persons other than the information owner from dealing and/or spreading the privacy information of the information owner through the blockchain network, which helps to protect the personal and property safety of the information owners.

In order to enable those skilled in the art to better understand the solutions of the present invention, the technical solutions in the embodiments of the present disclosure are clearly and completely described in the following with reference to the accompanying drawings in the embodiments of the present invention.

The terms "first", "second", "third", "fourth", etc. (if present) in the specification, claims and the above drawings of the present disclosure are used to distinguish similar objects and are not necessarily used to describe a specific sequence or order. It should be understood that the data so used may be interchanged where appropriate so that the embodiments described herein can be implemented in a sequence other than what is illustrated or described herein. In addition, the terms "comprises" and "have" and their variations are intended to cover a non-exclusive inclusion, for example, a process, method, system, product or device that comprises a series of steps or units is not necessarily limited to those explicitly listed steps or units, but may include other steps or units not explicitly listed or may include other steps or units inherent to the process, method, product or device.

Examples of the present disclosure provide a method for processing vehicle-related information based on blockchain, which is based on blockchain technology and applied to a blockchain network. A network constructed based on blockchain technology may be referred to as a blockchain network, and a blockchain network includes a plurality of network nodes, hereinafter referred to as of blockchain nodes, and a network node refers to a device having a unique network address in a blockchain network, such as workstations, servers, terminal devices, etc. Blockchain is a distributed and reliable technical scheme that uses a decentralization and distrust way to collectively maintain a set of data. Blockchain data is stored in each node of the blockchain, each node has a complete blockchain and no paralyzed node will cause the loss of blockchain data, which make the blockchain data have strong security. The blockchain is formed by a series of interrelated blocks generated by using a cryptographic method; each block contains all information exchange data of the blockchain system for a certain period of time, and generates a data fingerprint for verifying the validity of the block information and linking to the next block. If the blockchain is only stored in one or several nodes, the possibility of forgery is very large, but if there is a complete blockchain in each node, and the blockchain data of each node remains the same, blockchains and blocks cannot be tampered with. After receiving the target information to be stored, blockchain nodes may compete for the recording rights through certain algorithm or rule, and the node that obtains the recording rights through competition generates a new block with the target information to be stored and all the information previously written in the blockchain by the cryptographic algorithm, and adds the generated new block into the blockchain, which may be referred to as depositing the target information in the blockchain because the blockchain cannot be tempered with.

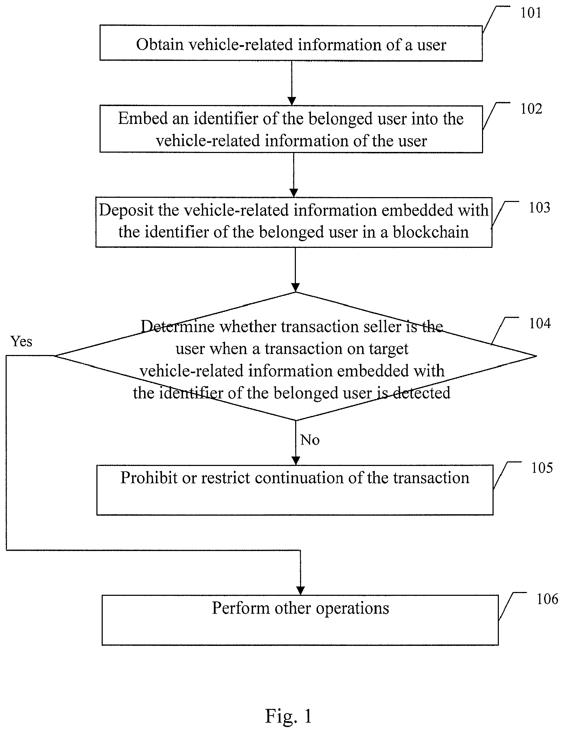

Referring to FIG. 1, an example method for processing vehicle-related information based on blockchain in an embodiment of the present disclosure includes:
step 101. obtaining vehicle-related information of a user.

A node of the blockchain network may obtain vehicle-related information that the user actively or passively uploads, and the vehicle-related information refers to information associated with the user's vehicle, such as vehicle maintenance information, insurance information, fueling information, peccancy information and the like.

As an example, the process of obtaining the vehicle-related information that the user "a" actively uploads may include: after the user "a" registers in the blockchain network, the blockchain network may create a pair of keys for the user "a", and the user "a" may use the private key to sign the vehicle-related information of his own vehicle, and the signed vehicle-related information is uploaded to the blockchain network.

As an example, the process of obtaining the vehicle-related information that the user "a" passively uploads may include:
step 101a. obtaining vehicle-related information that the user "b" uploads.

After collecting the vehicle-related information of the user "a", the user "b" may upload the collected vehicle-related information of the user "a" to the blockchain network, so that the blockchain network performs the transaction on the uploaded vehicle-related information according to the smart contract set by the user "b".

Step 101b. determining whether the vehicle owner corresponding to the obtained vehicle-related information is the user "a" according to a pre-stored identity identifier of the user "a".

The blockchain network may pre-store the identity identifies of the user "a", the user "b" and the user "c", such as the name, the ID number, the address, the license plate number and so on. After obtaining the vehicle-related information uploaded by the user "b", the owner of the vehicle corresponding to the vehicle-related information may be determined by keyword identification, semantic recognition or the like, and whether the owner is the user "a" is determined. If the owner is the user "a" step 101c is performed, and if the owner is not the user "a" step 101d is performed.

Step 101c. determining that the obtained vehicle-related information belongs to the user "a".

If it is determined that the vehicle owner corresponding to the vehicle-related information is the user "a", it is determined that the vehicle-related information of the user "a" is obtained.

Step 101d. performing other operations.

If it is determined that the owner of the vehicle corresponding to the vehicle-related information is not the user "a", other operations may be performed, such as continuing to determine whether the owner of the vehicle corresponding to the vehicle-related information is the user "b" or the user "c" until the owner of the vehicle-related information is found. If the owner cannot be found according to the pre-stored user identity identifier, it can be determined that the vehicle owner corresponding to the vehicle-related information is the user "b", that is, the data uploader.

Step 102. embedding an identifier of the user into the vehicle-related information of the user.

After obtaining the vehicle-related information of the user, an identifier of the user will be embedded into the obtained vehicle-related information. The identifier of the user is used to indicate the user to which the vehicle-related information belongs during the transmission of the vehicle-related information. As a possible implementation, a node of the blockchain network may embed a digital watermark of the user in the vehicle-related information of the user. A node of the blockchain network may embed different digital watermarks in vehicle-related information of different users and record the correspondence between the digital watermarks and the users, thereby facilitating identification of the user to which the vehicle-related information belongs according to the digital watermark in the vehicle-related information.

Digital watermark technology embeds some identification information (i.e., digital watermark) directly into a digital carrier (including multimedia, documents, software, etc.) or is an indirectly representation (modifies the structure of a specific area), which does not affect the use value of the original carrier and is not easy to be detected and modified again, but can be identified and recognized by the producer. Commonly used digital watermark algorithms include a spatial domain algorithm, a transform domain algorithm and a compression domain algorithm and so on. The examples of the present disclosure do not limit a specific algorithm for embedding a digital watermark.

Step 103. depositing the vehicle-related information embedded with the identifier of the user in a blockchain.

After the vehicle-related information of the user is embedded with the identifier of the user, the node of the blockchain network will deposit the vehicle-related information embedded with the identifier of the user in the blockchain as a transaction object based on the blockchain network. Specifically, when receiving the query request for the vehicle-related information, the node of the blockchain network can perform the transaction on the vehicle-related information according to the corresponding smart contract, and when the query request satisfies the requirement of the smart contract, the vehicle-related information may be sent to the requestor of the query request, that is, the buyer of the transaction.

Step 104. determining whether the seller of the transaction is the user when a transaction on target vehicle-related information embedded with the identifier of the user is detected.

When the transaction on the vehicle-related information is detected, it may be determined whether the vehicle-related information (transaction object) involved in the transaction is embedded with the identifier of the user, and if the vehicle-related information involved in the transaction is embedded with the identifier of the user it is assumed that the identifier of the user "a" is embedded, and at this time, whether the seller of the transaction is the user "a" is determined, if the seller of the transaction is not the user "a" step 105 is performed and if the seller of the transaction is the user "a" step 106 is performed.

Step 105. prohibiting or restricting continuation of the transaction.

If it is determined that the seller of the transaction is not the user "a", continuation of the transaction may be prohibited or restricted (i.e., conditionally permitted).

Step 106. performing other operations.

If it is determined that the seller of the transaction is the user "a", it indicates that the user "a" is performing a transaction on his own vehicle-related information. At this time, the node of the blockchain network can perform other operations, such as permitting continuation of the transaction.

In an embodiment of the present disclosure, it is provided a method for processing vehicle-related information based on blockchain, a node of a blockchain network may obtain vehicle-related information of a user, embed an identifier of the user into the vehicle-related information of the user, deposit the vehicle-related information embedded with the identifier of the user in a blockchain as a transaction object based on the blockchain network. When a transaction is detected, the vehicle-related information involved in the transaction is obtained, whether the vehicle-related information involved in the transaction is embedded with an identifier of the user is determined, if the vehicle-related information of the transaction is embedded with the identifier of the user the seller of the transaction is determined and whether the seller of the transaction is the user corresponding to the embedded belonged identifier is determined, if the vehicle-related information of the transaction is not embedded with the identifier of the user, continuation of the transaction is prohibited or restricted. In this way, it helps to prohibit or restrict people other than the information owner from transmitting the private information of the information owner through the blockchain network, which is beneficial to protect the personal and property security of the information owner.

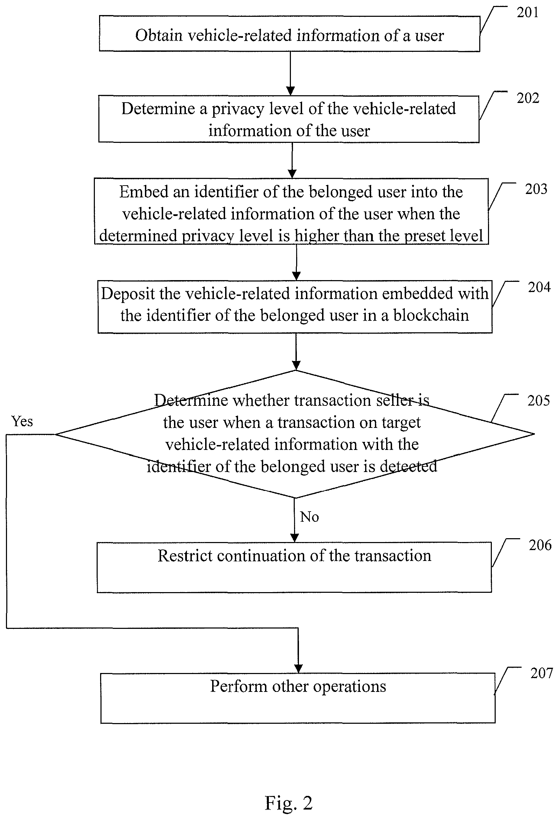

Referring to FIG. 2, another example method for processing vehicle-related information based on blockchain in an embodiment of the present disclosure includes:
step 201. obtaining vehicle-related information of a user.
Step 201 is the same as step 101 in the embodiment corresponding to FIG. 1, and details are not described herein again.
Step 202. determining a privacy level of the vehicle-related information of the user.

After obtaining the vehicle-related information of the user, the node of the blockchain network will determine the privacy level of the vehicle-related information, for example, the privacy level may be determined by keyword or semantic recognition. As an example, the following rule is preset: if the vehicle-related information includes a preset information type, such as a user's ID number, name, mobile number, or license plate number, it is determined that the privacy level of the vehicle-related information is level 2; if the information does not include the above preset information type, it is determined that the privacy level of the vehicle-related information is level 1.

Step 203. embedding an identifier of the user into the vehicle-related information of the user when the determined privacy level is higher than the preset level.

After determining the privacy level of the vehicle-related information of the user, whether the privacy level is higher than the preset level will be determined, and the higher the privacy level, the higher the relevance to the user's personal or property security, when the privacy level is higher than the preset level, the identifier of the user may be embedded into the vehicle-related information of the user, which facilitates tracking and monitoring the user's private information and protects the user's privacy. Continuing with the example in step 202, the preset level may be level 1, when the privacy level of the vehicle-related information is level 2, the identifier of the user will be embedded into the vehicle-related information of the user. The belonged identifier of the vehicle may be a digital watermark of the user, and the step of embedding an identifier of the user into the vehicle-related information of the user could refer to step 102 in the embodiment corresponding to FIG. 1, and details are not repeatedly described herein.

Step 204. depositing the vehicle-related information embedded with the identifier of the user in a blockchain.

After the vehicle-related information of the user is embedded with the identifier of the user, the node of the blockchain network will deposit the vehicle-related information embedded with the identifier of the user in the blockchain as a transaction object based on the blockchain network. Specifically, when receiving the query request for the vehicle-related information, the node of the blockchain network will perform the transaction on the vehicle-related information according to the corresponding smart contract, and when the query request satisfies the requirement of the smart contract, the vehicle-related information will be sent to the requestor of the query request, that is, the buyer of the transaction.

Step 205. determining whether the seller of the transaction is the user when a transaction on target vehicle-related information with the identifier of the user is detected, performing step 206 if the seller of the transaction is not the user and performing step 207 if the seller of the transaction is the user;

When the transaction on the vehicle-related information is detected, it will be determined whether the vehicle-related information (or referring to as transaction object) involved in the transaction is embedded with the identifier of the user, and if the vehicle-related information is embedded with the identifier of the user it is assumed that the identifier of the user "a" is embedded, and at this time, whether the seller of the transaction is the user "a" is determined, if the seller of the transaction is not the user "a" it is assumed that the seller of the transaction is the user "b" and step 206 is performed, if the seller of the transaction is the user "a" step 207 is performed.

Step 206. restricting continuation of the transaction.

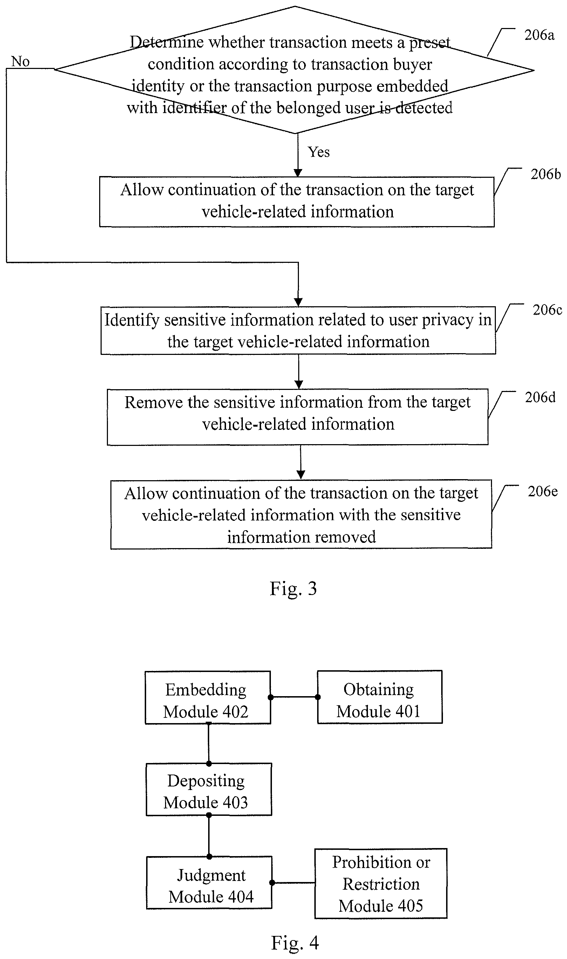

If it is determined that the seller of the transaction is not the user "a", the node of the blockchain network will prohibit or restrict continuation of the transaction. In order to improve the utilization of the vehicle-related information of the user "a" under the premise of ensuring the privacy security of the user "a", restricting continuation of the transaction may be chose. Specifically, please refer to FIG. 3, which shows a possible refinement step of step 206 and a specific implementation for restricting continuation of the transaction may include:
step 206a. determining whether the transaction meets a preset condition according to the identity of the buyer of the transaction or the purpose of the transaction.

It is assumed that the vehicle-related information for the transaction is embedded with the identifier of the user "a". For convenience of description, the vehicle-related information may be referred to as target vehicle-related information. If it is determined that the seller of the transaction is not the user "a", whether the transaction meets a preset condition may be determined according to the identity of the buyer of the transaction or the purpose of the transaction. If the transaction meets the preset condition step 206b is performed, otherwise step 206c is performed.

As an example, whether the identity of the buyer of the transaction is in the preset permitted list may be determined. For example, the permitted list may include police officers, officers of a social security unit and officers of the courts and so on. If the identity of the buyer is in the permitted list, it can be determined that the transaction meets the preset condition; otherwise, it is determined that the transaction does not meet the preset condition; or the purpose of the transaction, for example, to provide a better service for the user "a", may be obtained from the query request sent by the buyer, then whether the purpose of the transaction meets the preset purpose is determined, if the purpose of the transaction meets the preset purpose, it can be determined that the transaction meets the preset condition, otherwise, it is determined that the transaction does not meet the preset condition.

Step 206b. permitting continuation of the transaction on the target vehicle-related information.

If it is determined that the transaction meets the preset condition, the user "b" may be allowed to continue the transaction on the target vehicle-related information.

Step 206c. identifying sensitive information related to user privacy in the target vehicle-related information.

If it is determined that the transaction does not meet the preset condition, the node of the blockchain network will identify sensitive information, such as ID number, name, license plate Number, etc., related to user privacy in the target vehicle-related information by means of keyword recognition or semantic recognition.

Step 206d. removing the sensitive information from the target vehicle-related information;

After identifying the sensitive information, the identified sensitive information will be removed from the target vehicle-related information. Preferably, in order to improve the readability of the target vehicle-related information with the sensitive information removed, after the sensitive information is removed, the corresponding fuzzy information may be used to fill the sensitive information, for example, the original target vehicle-related information includes "Zhang San (license plate number 123456) has a parking violation on March 5, 2018", after removing and filling the sensitive information, the target vehicle-related information includes "Zhang * (license plate number 12**56) has a parking violation on March 5, 2018".

Step 206e. permitting continuation of the transaction on the target vehicle-related information with the sensitive information removed.

After the sensitive information is removed from the target vehicle-related information, the node of the blockchain network will allow the user "b" to continue the transaction on the target vehicle-related information with the sensitive information removed. Moreover, since the target vehicle-related information with the sensitive information removed has little impact on the privacy security of the user "a", preferably, after removing the sensitive information of the target vehicle-related information, the belonged identifier may be removed, so that when the target vehicle-related information with the sensitive information removed is traded and circulated in the blockchain network, it will no longer be supervised by the blockchain network, thereby reducing the computational complexity of the blockchain network and improving the efficiency of information transaction and circulation.

It should be noted that, in actual use, if in step 206a it is determined that the transaction does not meet the preset condition continuation of the transaction on the target vehicle-related information may be prohibited so as to protect the user's privacy. However, preferably, in order to improve the utilization of the target vehicle-related information, steps 206c to 206e may be performed.

Step 207. performing other operations.

If it is determined that the seller of the transaction is the user "a", it indicates that the user "a" is performing a transaction on his own vehicle-related information. At this time, the node of the blockchain network can perform other operations, such as permitting continuation of the transaction.

In an embodiment of the present disclosure, by determining the privacy level of the vehicle-related information and embedding the identifier of the user for the vehicle-related information with higher privacy level, belonged identifier embed and subsequent tracing and monitoring are not performed for the vehicle-related information with lower privacy under the premise of protecting user privacy. Compared with the embodiment corresponding to FIG. 1, it is beneficial to reduce the computation complexity of the blockchain network and improve the transaction efficiency of the vehicle-related information.

A method for processing vehicle-related information based on blockchain in an embodiment of the present disclosure has been described above. An apparatus for processing vehicle-related information based on blockchain in an embodiment of the present disclosure will be described below.

Referring to FIG. 4, an example apparatus for processing vehicle-related information based on blockchain in an embodiment of the present disclosure includes:
an obtaining module 401 configured to obtain vehicle-related information of a user;
an embedding module 402 configured to embed an identifier of the user into the vehicle-related information of the user;
a depositing module 403 configured to deposit the vehicle-related information embedded with the identifier of the user in a blockchain as a transaction object based on the blockchain network;
a judgment module 404 configured to determine whether a seller of a transaction is the user when the transaction on target vehicle-related information embedded with the identifier of the user is detected; and
a prohibition or restriction module 405 configured to prohibit or restrict continuation of the transaction when the determination module determines that the seller of the transaction is not the user.

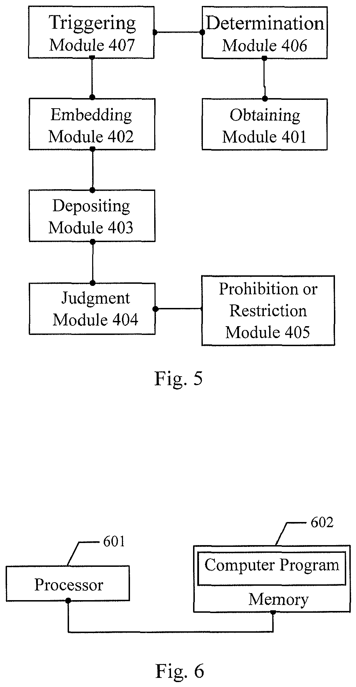

Optionally, an apparatus for processing vehicle-related information based on blockchain in an embodiment of the present disclosure may further include a determination module 406 and a triggering module 407. Referring to FIG. 5, another example apparatus for processing vehicle-related information based on blockchain in an embodiment of the present disclosure includes:
an obtaining module 401 configured to obtain vehicle-related information of a user;
a determination module 406 configured to determine a privacy level of the vehicle-related information of the user after the obtaining module obtains the vehicle-related information of a user and before an embedding module embeds an identifier of the user into the vehicle-related information of the user;
a triggering module 407 configured to trigger the embedding unit when the privacy level determined by the determination module is higher than a preset level;
an embedding module 402 configured to embed an identifier of the user into the vehicle-related information of the user when the privacy level determined by the determination module is higher than a preset level;
a depositing module 403 configured to deposit the vehicle-related information embedded with the identifier of the user in a blockchain as a transaction object based on the blockchain network;
a judgment module 404 configured to determine whether a seller of a transaction is the user when the transaction on target vehicle-related information embedded with the identifier of the user is detected; and
a prohibition or restriction module 405 configured to prohibit or restrict continuation of the transaction when the judgment module 404 determines that the seller of the transaction is not the user.

Optionally, in some embodiments of the present disclosure, the embedding module 402 may include:
a watermark embedding unit 4021 configured to embed a digital watermark of the user into the vehicle-related information of the user.

Optionally, in some embodiments of the present disclosure, the prohibition or restriction module 405 may include:
a first determination unit 4051 configured to determine, according to an identity of a buyer of the transaction or a purpose of the transaction, whether the transaction meets a preset condition; and
a direct permission unit 4052 configured to permit continuation of the transaction on the target vehicle-related information when the first determination unit 4051 determines that the transaction meets the preset condition.

Optionally, in some embodiments of the present disclosure, the prohibition or restriction module 405 may further include an indirect permission unit 4053, where the indirect permission unit 4053 is configured to perform following steps when the first determination unit 4051 determines that the transaction does not meet the preset condition:
identifying sensitive information related to user privacy in the target vehicle-related information;
removing the sensitive information from the target vehicle-related information; and
permitting continuation of the transaction on the target vehicle-related information with the sensitive information removed.

Optionally, in some embodiments of the present disclosure, the obtaining module 401 includes:
an obtaining unit 4011 configured to obtain vehicle related information;
a second determination unit 4012 configured to determine whether vehicle owner corresponding to the obtained vehicle-related information is the user according to a pre-stored identity identifier of the user; and
a judge unit 4013 configured to determine that the obtained vehicle-related information belongs to the user when the second determination unit 4012 determines that the vehicle owner corresponding to the obtained vehicle-related information is the user.

The apparatus for processing vehicle-related information based on blockchain in the embodiment of the present disclosure is described above from the perspective of a modular functional entity. The following describes the computer device in an embodiment of the present invention from the perspective of hardware processing:
Referring to Fig. 6, an example computer device in an embodiment of the present disclosure includes:
a processor 601 and a memory 602;
the memory 602 is configured to store a computer program and the processor 601 is configured,
when executing a computer program stored in the memory 602, to implement following steps:
obtaining vehicle-related information of a user;
embedding an identifier of the user into the vehicle-related information of the user;
depositing the vehicle-related information embedded with the identifier of the user in a blockchain as a transaction object based on the blockchain network;
determining whether a seller of a transaction is the user when the transaction on target vehicle-related information embedded with the identifier of the user is detected; and
prohibiting or restricting continuation of the transaction when the seller of the transaction is not the user.

In some embodiments of the present disclosure, when the processor 601 is configured to execute the computer program stored in the memory 602, embedding an identifier of the user into the vehicle-related information of the user may specifically implement the following step:
embedding a digital watermark of the user into the vehicle-related information of the user.

In some embodiments of the present disclosure, when executing the computer program stored in the memory 602, the processor 601 further implement following steps:
determining a privacy level of the vehicle-related information of the user; and
triggering the step of embedding an identifier of the user into the vehicle-related information of the user when the determined privacy level is higher than a preset level.

In some embodiments of the present disclosure, when the processor 601 is configured to execute the computer program stored in the memory 602, restricting continuation of the transaction may specifically implement the following steps:
determining whether the transaction meets a preset condition according to an identity of a buyer of the transaction or a purpose of the transaction; and
permitting continuation of the transaction on the target vehicle-related information when the transaction meets the preset condition.

In some embodiments of the present disclosure, when executing the computer program stored in the memory 602, if it is determined that the transaction does not meet the preset condition, the processor 601 further implement following steps:
identifying sensitive information related to user privacy in the target vehicle-related information;
removing the sensitive information from the target vehicle-related information; and
permitting continuation of the transaction on the target vehicle-related information with the sensitive information removed.

In some embodiments of the present disclosure, when the processor 601 is configured to execute the computer program stored in the memory 602, obtaining vehicle-related information of the user may specifically implement the following steps:
obtaining vehicle-related information;
determining, according to a pre-stored identity identifier of the user, whether vehicle owner corresponding to the obtained vehicle-related information is the user; and
determining that the obtained vehicle-related information belongs to the user when it is determined that the vehicle owner corresponding to the obtained vehicle-related information is the user.

It can be understood that, when the processor in the computer device described above executes the computer program, the functions of each unit in the corresponding device embodiments may be implemented, and details are not described herein again. Illustratively, the computer program can be partitioned into one or more modules/units that are stored in the memory and executed by the processor to perform the present disclosure. The one or more modules/units may be a series of computer program instruction segments capable of performing a particular function, the instruction segments are used to describe the execution of the computer program in the apparatus for processing vehicle-related information based on blockchain. For example, the computer program may be divided into units in the above-described apparatus for processing vehicle-related information based on blockchain, and each unit may implement a specific function as explained by the above-described apparatus for processing vehicle-related information based on blockchain.

The computer device may be a computing device such as a desktop computer, a notebook, a palmtop computer, and a cloud server. The computer device can include, but is not limited to, a processor, a memory.

The processor may be CPU (Central Processing Unit), and may alternatively be other general purpose processor, DSP (Digital Signal Processor), ASIC (Application Specific Integrated Circuit), FGPA (Field-Programmable Gate Array), or some other programmable logic devices, discrete gate or transistor logic device, discrete hardware component, etc. The general purpose processor may be a microprocessor, or alternatively, the processor may be any conventional processor and so on. The processor is a control center of the computer device, and connected to various parts of the entire computer device using various interfaces and lines.

The memory can be used to store the computer program and/or module, the processor implementing various functions of the computer device by running or executing a computer program and/or module stored in the memory, and calling data stored in the memory. The memory may mainly include a program storage area and a data storage area, where the program storage area may store an operating system, an application required for at least one function, and the like; the data storage area may store data created according to usage of the terminal, and the like. In addition, the memory may include a high-speed random access memory, and may also include a non-volatile memory such as a hard disk, a memory, a plug-in hard disk, a smart memory card (SMC), a secure digital (SD) card, a flash card, at least one disk storage device, a flash memory device, or other volatile solid-state storage device.

The present disclosure further provides a computer readable storage medium having a computer program stored therein, where the computer program is configured to implement following steps when executed by a processor:
obtaining vehicle-related information of a user;
embedding an identifier of the user into the vehicle-related information of the user;
depositing the vehicle-related information embedded with the identifier of the user in a blockchain as a transaction object based on the blockchain network;
determining whether a seller of a transaction is the user when the transaction on target vehicle-related information embedded with the identifier of the user is detected; and
prohibiting or restricting continuation of the transaction when the seller of the transaction is the user.

In some embodiments of the present disclosure, when the computer program stored in the computer readable storage medium is executed by a processor, embedding an identifier of the user into the vehicle-related information of the user may specifically implement the following step:
embedding a digital watermark of the user into the vehicle-related information of the user.

In some examples of the present disclosure, when the computer program stored in the computer readable storage medium is executed by a processor, following steps may be further implemented:
determining a privacy level of the vehicle-related information of the user; and
triggering the step of embedding an identifier of the user into the vehicle-related information of the user when the determined privacy level is higher than a preset level.

In some examples of the present disclosure, when the computer program stored in the computer readable storage medium is executed by a processor, restricting continuation of the transaction may specifically implement the following steps:
determining whether the transaction meets a preset condition according to an identity of a buyer of the transaction or a purpose of the transaction; and
permitting continuation of the transaction on the target vehicle-related information when the transaction meets the preset condition.

In some examples of the present disclosure, when the computer program stored in the computer readable storage medium is executed by a processor, if it is determined that the transaction does not meet the preset condition, following steps may be further implemented:
identifying sensitive information related to user privacy in the target vehicle-related information;
removing the sensitive information from the target vehicle-related information; and
permitting continuation of the transaction on the target vehicle-related information with the sensitive information removed.

In some examples of the present disclosure, when the computer program stored in the computer readable storage medium is executed by a processor, obtaining vehicle-related information of the user may specifically implement the following steps:
obtaining vehicle-related information;
determining, according to a pre-stored identity identifier of the user, whether vehicle owner corresponding to the obtained vehicle-related information is the user; and
determining that the obtained vehicle-related information belongs to the user when it is determined that the vehicle owner corresponding to the obtained vehicle-related information is the user.

It should be understood that if the integrated unit is achieved in the form of software functional units, and is sold or used as an independent product, it can be stored in a computer readable storage medium. Based on this understanding, a whole or part of flow process of implementing the method in the aforesaid embodiments of the present disclosure can also be accomplished by using computer program to instruct relevant hardware. When the computer program is executed by the processor, the steps in the various method embodiments described above can be implemented. Wherein, the computer program comprises computer program codes, which can be in the form of source code, object code, executable documents or some intermediate form, etc. The computer readable medium can include: any entity or device that can carry the computer program codes, recording medium, USB flash disk, mobile hard disk, hard disk, optical disk, computer storage device, ROM (Read-Only Memory), RAM (Random Access Memory), electrical carrier signal, telecommunication signal and software distribution medium, etc.readable medium doesn't include electrical carrier signal and telecommunication signal.

It can be clearly understood by those skilled in the art that, for describing conveniently and concisely, regarding detailed working process of the system, apparatus and units described above, reference may be made to the corresponding process in the previously described method embodiments, and it is not repeatedly described herein.

In some examples provided in the present disclosure, it should be understood that, the system, apparatus and method may be implemented according to some other approaches. For example, the aforementioned apparatus embodiments are schematic merely, for example, the division of the aforementioned units is just a kind of logic function division, some other divisions can be used in actual implementations, for example, a plurality of units or components can be combined or integrated into another system, or some features can be ignored or unexecuted. Another point, the interacted coupling or directly coupling or communication connection displayed or discussed can be indirect coupling or communication connection via some ports, apparatus or units, and the form of the connection can be electrical, mechanical, or other types.

The units described as separate components may be or not be physically separate, the components shown as units may be or not be physical units, that is, the components may be located in one place or distributed to multiple network units. A part or all of the units could be selected according to actual need to achieve the objective of the technical solution of this embodiment.

The various functional units in the embodiments of the present disclosure may be integrated into a processing unit, or each of the units exists independently and physically, or two or more than two of the units are integrated into a single unit.

## Claims

1. A method for processing vehicle-related information based on blockchain, which is applied to a node of a blockchain network and comprises:
obtaining (101, 201) vehicle-related information of a user;
embedding (102, 203) an identifier of the user into the vehicle-related information of the user;
depositing (103, 204) the vehicle-related information embedded with the identifier of the user in a blockchain as a transaction object based on the blockchain network;
determining (104, 205) whether a seller of a transaction is the user when the transaction on target vehicle-related information embedded with the identifier of the user is detected; and
prohibiting or restricting (105, 206) continuation of the transaction when the seller of the transaction is not the user;
**characterized in that**,
after said obtaining vehicle-related information of a user and before said embedding an identifier of the user into the vehicle-related information of the user, the method further comprises:
determining (202) a privacy level of the vehicle-related information of the user; and
triggering (203) the step of embedding an identifier of the user into the vehicle-related information of the user when the determined privacy level is higher than a preset level.

2. The method according to claim 1, wherein said embedding an identifier of the user into the vehicle-related information of the user comprises:
embedding a digital watermark of the user into the vehicle-related information of the user.

3. The method according to claim 1, wherein said restricting continuation of the transaction comprises:
determining, according to an identity of a buyer of the transaction or a purpose of the transaction, whether the transaction meets a preset condition; and
permitting continuation of the transaction on the target vehicle-related information when the transaction meets the preset condition.

4. The method according to claim 3, wherein when it is determined that the transaction does not meet the preset condition, the method further comprises:
identifying sensitive information related to user privacy in the target vehicle-related information;
removing the sensitive information from the target vehicle-related information; and
permitting continuation of the transaction on the target vehicle-related information with the sensitive information removed.

5. The method according to any one of claims 1 to 4, wherein said obtaining vehicle-related information of a user comprises:
obtaining vehicle-related information;
determining, according to a pre-stored identity identifier of the user, whether vehicle owner corresponding to the obtained vehicle-related information is the user; and
determining that the obtained vehicle-related information belongs to the user when it is determined that the vehicle owner corresponding to the obtained vehicle-related information is the user.

6. An apparatus for processing vehicle-related information based on blockchain, which is applied to a node of a blockchain network and comprises:
an obtaining module (401) configured to obtain vehicle-related information of a user;
an embedding module (402) configured to embed an identifier of the user into the vehicle-related information of the user;
a depositing module (403) configured to deposit the vehicle-related information embedded with the identifier of the user in a blockchain as a transaction object based on the blockchain network;
a determination module (406) configured to determine whether a seller of a transaction is the user when the transaction on target vehicle-related information embedded with the identifier of the user is detected; and
a prohibition or restriction module (405) configured to prohibit or restrict continuation of the transaction when the determination module (406) determines that the seller of the transaction is not the user;
**characterized in that**
the determination module (406) is further configured to determine a privacy level of the vehicle-related information of the user after the obtaining module (401) obtains the vehicle-related information of the user and before the embedding module (402) embeds the identifier of the user into the vehicle-related information of the user; and
the embedding module (402) is further configured to embed the identifier of the user into the vehicle-related information of the user when the privacy level determined by the determination module (406) is higher than a preset level.

7. The apparatus according to claim 6, wherein the embedding module (402) comprises:
a watermark embedding unit (4021) configured to embed a digital watermark of the user into the vehicle-related information of the user.

8. A computer device comprising a processor (601), wherein the processor (601) is configured, when executing a computer program stored in a memory (602), to implement steps of the method according to any of claims 1 to 5.

9. A computer readable storage medium having a computer program stored therein, wherein the computer program is configured to implement steps of the method according to any of claims 1 to 5 when executed by a processor (601).

## Patentansprüche

1. Verfahren zum Verarbeiten von fahrzeugbezogener Information auf der Grundlage von Blockchain, das auf einen Knoten eines Blockchain-Netzwerks angewendet wird und umfasst:
Erhalten (101, 202) von fahrzeugbezogener Information eines Nutzers;
Einbetten (102, 203) eines Identifikators des Nutzers in die fahrzeugbezogene Information des Nutzers;
Hinterlegen (103, 204) der fahrzeugbezogenen Information, die mit dem Identifikator des Nutzers eingebettet ist, in einer Blockchain als ein Transaktionsobjekt, das auf dem Blockchain-Netzwerk basiert;
Bestimmen (104, 205), ob ein Verkäufer einer Transaktion der Nutzer ist, wenn die Transaktion über zielfahrzeugbezogene Information, die in den Identifikator des Nutzers eingebettet ist, erkannt wird; und
Verbieten oder Einschränken (105, 206) einer Fortsetzung der Transaktion, wenn der Verkäufer der Transaktion nicht der Nutzer ist;
**dadurch gekennzeichnet, dass**
das Verfahren, nach dem Erhalten von fahrzeugbezogener Information eines Nutzers und vor dem Einbetten eines Identifikators des Nutzers in die fahrzeugbezogene Information des Nutzers, ferner umfasst:
Bestimmen (202) einer Vertraulichkeitsstufe der fahrzeugbezogenen Information des Nutzers; und
Auslösen (203) des Schritts des Einbettens eines Identifikators des Nutzers in die fahrzeugbezogene Information des Nutzers, wenn die bestimmte Vertraulichkeitsstufe höher als eine voreingestellte Stufe ist.

2. Verfahren gemäß Anspruch 1, wobei das Einbetten eines Identifikators des Nutzers in die fahrzeugbezogene Information des Nutzers umfasst:
Einbetten eines digitalen Wasserzeichens des Nutzers in die fahrzeugbezogene Information des Nutzers.

3. Verfahren gemäß Anspruch 1, wobei das Einschränken der Fortführung der Transaktion umfasst:
Bestimmen, ob die Transaktion eine vorgegebene Bedingung erfüllt, in Abhängigkeit von der Identität eines Käufers der Transaktion oder einem Zweck der Transaktion; und
Ermöglichen einer Fortsetzung der Transaktion an der zielfahrzeugbezogenen Information, wenn die Transaktion die vorgegebene Bedingung erfüllt.

4. Verfahren nach Anspruch 3, wobei, wenn festgestellt wird, dass die Transaktion die vorgegebene Bedingung nicht erfüllt, das Verfahren ferner umfasst:
Identifizieren sensibler Information in Bezug auf die Privatsphäre des Nutzers in der zielfahrzeugbezogenen Information;
Entfernen der sensiblen Information aus der zielfahrzeugbezogenen Information; und
Erlauben einer Fortsetzung der Transaktion mit der zielfahrzeugbezogenen Information unter Entfernung der sensiblen Information.

5. Verfahren gemäß einem der Ansprüche 1 bis 4, wobei das Erhalten von fahrzeugbezogener Information eines Nutzers umfasst:
Einholen von fahrzeugbezogener Information;
Bestimmen, gemäß eines vorgespeicherten Identitätsidentifikators des Nutzers, ob der Fahrzeugbesitzer, der der erhaltenen fahrzeugbezogenen Information entspricht, der Nutzer ist; und
Feststellen, dass die erhaltene fahrzeugbezogene Information zu dem Nutzer gehört, wenn festgestellt wird, dass der Fahrzeugbesitzer, der der erhaltenen fahrzeugbezogenen Information entspricht, der Nutzer ist.

6. Vorrichtung zur Verarbeitung von fahrzeugbezogener Information auf der Grundlage von Blockchain, die auf einen Knoten eines Blockchain-Netzwerks angewandt wird und umfasst:
ein Erfassungsmodul (401), das so konfiguriert ist, dass es fahrzeugbezogene Information eines Nutzers erhält;
ein Einbettungsmodul (402), das so konfiguriert ist, dass es einen Identifikator des Nutzers in die fahrzeugbezogene Information des Nutzers einbettet;
ein Hinterlegungsmodul (403), das so konfiguriert ist, dass es die fahrzeugbezogene Information, die mit dem Identifikator des Nutzers eingebettet ist, in einer Blockchain als ein Transaktionsobjekt auf der Grundlage des Blockchain-Netzwerks hinterlegt;
ein Bestimmungsmodul (406), das so konfiguriert ist, dass es bestimmt, ob ein Verkäufer einer Transaktion der Nutzer ist, wenn die Transaktion über zielfahrzeugbezogene Information, die in den Identifikator des Nutzers eingebettet ist, erkannt wird; und
ein Verbots- oder Beschränkungsmodul (405), das so konfiguriert ist, dass es die Fortsetzung der Transaktion verbietet oder beschränkt, wenn das Bestimmungsmodul (406) feststellt, dass der Verkäufer der Transaktion nicht der Nutzer ist;
**dadurch gekennzeichnet, dass**
das Bestimmungsmodul (406) ferner so konfiguriert ist, dass es eine Vertraulichkeitsstufe der fahrzeugbezogenen Information des Nutzers bestimmt, nachdem das Beschaffungsmodul (401) die fahrzeugbezogene Information des Nutzers erhalten hat und bevor das Einbettungsmodul (402) den Identifikator des Nutzers in die fahrzeugbezogene Information des Nutzers einbettet; und
das Einbettungsmodul (402) ferner so konfiguriert ist, dass es den Identifikator des Nutzers in die fahrzeugbezogene Information des Nutzers einbettet, wenn die vom Bestimmungsmodul (406) bestimmte Vertraulichkeitsstufe höher als eine voreingestellte Stufe ist.

7. Vorrichtung nach Anspruch 6, wobei das Einbettungsmodul (402) umfasst:
eine Wasserzeichen-Einbettungseinheit (4021), die konfiguriert ist, um ein digitales Wasserzeichen des Nutzers in die fahrzeugbezogene Information des Nutzers einzubetten.

8. Computervorrichtung, die einen Prozessor (601) umfasst, wobei der Prozessor (601) so konfiguriert ist, dass er, wenn er ein in einem Speicher (602) gespeichertes Computerprogramm ausführt, Schritte des Verfahrens gemäß einem der Ansprüche 1 bis 5 implementiert.

9. Computerlesbares Speichermedium mit einem darin gespeicherten Computerprogramm, wobei das Computerprogramm konfiguriert ist, um Schritte des Verfahrens gemäß einem der Ansprüche 1 bis 5 zu implementieren, wenn es von einem Prozessor (601) ausgeführt wird.

## Revendications

1. Procédé de traitement d'informations associées à un véhicule sur la base d'une chaîne de blocs, qui est appliqué à un noeud d'un réseau de chaînes de blocs et comprend:
l'obtention (101, 201) d'informations associées au véhicule d'un utilisateur;
l'intégration (102, 103) d'un identifiant de l'utilisateur dans les informations associées à un véhicule de l'utilisateur;
le dépôt (103, 204) des informations associées à un véhicule intégrées avec l'identifiant de l'utilisateur dans une chaîne de blocs comme objet de transaction sur la base du réseaux de chaînes de blocs;
la détermination (104, 205) si un vendeur d'une transaction est l'utilisateur quand la transaction sur les informations associées à un véhicule cibles intégrées avec l'identifiant de l'utilisateur est détectée; et
l'interdiction ou la restriction (105, 206) de poursuivre la transaction lorsque le vendeur de la transaction n'est pas l'utilisateur;
**caractérisé en ce que**,
après ladite obtention des informations associées à un véhicule d'un utilisateur et avant ladite intégration d'un identifiant de l'utilisateur dans les informations associées à un véhicule de l'utilisateur, le procédé comprenant en outre:
la détermination (202) d'un niveau de confidentialité des informations associées à un véhicule de l'utilisateur; et
le déclenchement (203) de l'étape d'intégration d'un identifiant de l'utilisateur dans les informations associées à un véhicule de l'utilisateur lorsque le niveau de confidentialité déterminé est supérieur à un niveau prédéfini.

2. Procédé selon la revendication 1, dans lequel ladite intégration d'un identifiant de l'utilisateur dans les informations associées à un véhicule de l'utilisateur comprend:
l'intégration d'un filigrane numérique de l'utilisateur dans les informations associées à un véhicule de l'utilisateur.

3. Procédé selon la revendication 1, dans ladite restriction de la poursuite de la transaction comprend:
la détermination, conformément à une identité d'un acheteur de la transaction ou à une raison de la transaction, si la transaction remplit une condition prédéfinie; et
l'autorisation à poursuivre la transaction sur les informations associées à un véhicule lorsque la transaction remplit la condition prédéfinie.

4. Procédé selon la revendication 3, dans lequel lorsqu'il est déterminé que la transaction ne remplit pas la condition prédéfinie, le procédé comprend en outre:
l'identification d'informations sensibles associées à la confidentialité de l'utilisateur dans les informations associées à un véhicule;
le retrait des informations sensibles des informations associées à un véhicule; et
l'autorisation à poursuivre la transaction sur les informations associées à un véhicule, les informations sensibles ayant été retirées.

5. Procédé selon l'une quelconque des revendications 1 à 4, dans lequel l'obtention des informations associées à un véhicule d'un utilisateur comprend:
l'obtention des informations associées à un véhicule;
la détermination, conformément à un identifiant d'identité de l'utilisateur stocké au préalable, si le propriétaire de véhicule correspondant aux informations associées à un véhicule obtenues est l'utilisateur; et
la détermination que les informations associées à un véhicule obtenues appartiennent à l'utilisateur lorsqu'il est déterminé que le propriétaire de véhicule correspondant aux informations associées à un véhicule est l'utilisateur.

6. Appareil de traitement d'informations associées à un véhicule sur la base d'une chaîne de blocs, qui est appliqué à un noeud d'un réseau de chaînes de blocs et comprend:
un module d'obtention (401) configuré pour obtenir des informations associées au véhicule d'un utilisateur;
un module d'intégration (402) configuré pour intégrer un identifiant de l'utilisateur dans les informations associées à un véhicule de l'utilisateur;
un module de dépôt (403) configuré pour déposer les informations associées à un véhicule intégrées avec l'identifiant de l'utilisateur dans une chaîne de blocs comme objet de transaction sur la base du réseaux de chaînes de blocs;
un module de détermination (406) configuré pour déterminer si un vendeur d'une transaction est l'utilisateur quand la transaction sur les informations associées à un véhicule cibles intégrées avec l'identifiant de l'utilisateur est détectée; et
un module d'interdiction ou de restriction (405) configuré pour interdire ou restreindre la poursuite de la transaction lorsque le module de détermination (406) détermine que le vendeur de la transaction n'est pas l'utilisateur;
**caractérisé en ce que**
le module de détermination (406) est en outre configuré pour déterminer un niveau de confidentialité des informations associées à un véhicule de l'utilisateur après que le module d'obtention (401) a obtenu les informations associées à un véhicule de l'utilisateur et avant que le module d'intégration (402) a intégré l'identifiant de l'utilisateur dans les informations associées à un véhicule de l'utilisateur; et
le module d'intégration (402) est en outre configuré pour intégrer l'identifiant de l'utilisateur dans les informations associées à un véhicule de l'utilisateur lorsque le niveau de confidentialité déterminé par le module de détermination (406) est supérieur à un niveau prédéfini.

7. Appareil selon la revendication 6, dans lequel le module d'intégration (402) comprend:
un module d'intégration de filigrane (4021) configuré pour intégrer un filigrane numérique de l'utilisateur dans les informations associées à un véhicule de l'utilisateur.

8. Dispositif informatique, comprenant un processeur (601), dans lequel le processeur (601) est configuré pour, lorsqu'il exécute un programme informatique stocké dans une mémoire (602), mettre en oeuvre les étapes du procédé selon l'une quelconque des revendications 1 à 5.

9. Support de stockage lisible par ordinateur sur lequel est stocké un programme informatique, dans lequel le programme informatique est configuré pour mettre en oeuvre les étapes du procédé selon l'une quelconque des revendications 1 à 5 lorsqu'il est exécuté par un processeur (601).
